(19) Europäisches Patentamt

European Patent Office

Office européen des brevets

(11) **EP 0 995 653 B1**

(12) **EUROPEAN PATENT SPECIFICATION**

(45) Date of publication and mention
of the grant of the patent:
**01.02.2006 Bulletin 2006/05**

(51) Int Cl.:
*B60T 7/08* (2006.01)   *B60T 11/10* (2006.01)
*B62K 11/14* (2006.01)   *B62K 23/02* (2006.01)
*B62L 3/08* (2006.01)

(21) Application number: **99120084.1**

(22) Date of filing: **20.10.1999**

(54) **Brake device for vehicle having barhandle**

Bremsvorrichtung für Fahrzeug mit Rohrlenker

Dispositif de freinage pour véhicule avec guidon

(84) Designated Contracting States:
**ES FR IT**

(30) Priority: **20.10.1998   JP   29789698**

(43) Date of publication of application:
**26.04.2000   Bulletin 2000/17**

(73) Proprietor: **NISSIN KOGYO CO., LTD.**
**Ueda-shi,**
**Nagano-ken (JP)**

(72) Inventor: **Matsuno, Isao**
**Ueda-shi,**
**Nagano-ken (JP)**

(74) Representative: **HOFFMANN EITLE**
**Patent- und Rechtsanwälte**
**Arabellastrasse 4**
**81925 München (DE)**

(56) References cited:
**DE-A- 3 812 977**          **DE-A- 19 535 116**
**FR-A- 2 720 992**          **GB-A- 2 154 292**

EP 0 995 653 B1

**Description**

BACKGROUND OF THE INVENTION

1. Field of the Invention

The present invention relates to a brake device applicable to various types of vehicles having a bar-type steering handle such as a motorcycle, a motorized tricycle, and a tricycle or quadricycle buggy, and more particularly to a brake device for a vehicle having a bar-type steering handle having two brake operators, wherein either of front and rear wheel brakes is activated by operating one of the two brake operators, while both of the front wheel and rear wheel brakes are activated in an interlocking fashion by operating the other brake operator.

2. Description of the Related Art

A brake device is disclosed, for instance, in a Japanese Unexamined Patent Publication (Kokai) No. Hei. 5-16862 in which front and rear wheel brakes for a vehicle having a bar-type steering handle are activated in an interlocking fashion.

In this technology, a mechanical brake designed to be activated through traction of a follower-side link mechanism is adopted for front and rear wheel brakes, and a pair of brake levers are pivotably supported by supporting shafts at end portions of a handlebar. An output distributing mechanism is disposed in the vicinity of the supporting shaft of one of the brake operators, and the pair of follower-side link mechanism are connected to the output distributing mechanism. A traction-side link mechanism linked to the other brake operator is connected to the opposite side of the output distributing mechanism across the supporting shaft of the one of the brake operators, and both of the front and rear wheel brakes are constructed so as to be activated in an interlocking fashion by operating either one or both of the brake operators.

The aforementioned output distributing mechanism is a plate-like equalizer lever rotatably supported at a floating fulcrum in the vicinity of the supporting shaft of the one of the brake operators, and the above-mentioned front wheel link mechanism and rear wheel link mechanism are connected to sides of the output distributing mechanism with the floating fulcrum therebetween. The output distributing mechanism is constructed so as to provide different output loads to the front and rear brakes by differentiating the distances from the floating fulcrum to connecting points of the both brake link mechanism.

In an interlocking-type brake device as described above, however, an input load can only simply be distributed to the front wheel brake and rear wheel brake with the output distributing mechanism, and output loads to the both brakes cannot be increased or decreased so as to become equal to, or greater or smaller than the input load. Thus, it is not possible to set a brake force in accordance with a certain vehicle body condition and performance, and purpose of application.

SUMMARY OF THE INVENTION

Thus, an object of the present invention is to provide a brake device for a vehicle having a bar-type steering handle in which when interlocking a first wheel brake such as a hydraulic brake and a second wheel brake such as a mechanical brake, output loads to the first wheel brake and the second wheel brake can be increased or decreased so as to become greater or smaller than an input load from a brake operator, thereby making it possible to set a preferable brake force that can match a certain vehicle body condition and performance, and purpose of application.

The aforementioned object can be achieved by a brake device according to claims 1 or 8. The invention is characterized by one of a front wheel brake and a rear wheel brake of a vehicle having a bar-type steering handle is constructed as a hydraulic brake operable through a hydraulic pressure produced in a hydraulic master cylinder by operating a first brake operator so as to effect a traction of an independent brake system link mechanism, while the other is constructed as a mechanical brake operable by operating a second brake operator so as to effect a traction of an interlocking brake system link mechanism. Built on the hydraulic master cylinder are an application force converting mechanism for converting an input load from the first brake operator into a hydraulic pressure of the hydraulic master cylinder and an output distributing mechanism for distributing an input from the second brake operator into a hydraulic pressure of the hydraulic master cylinder and an application force of the mechanical brake, and a master cylinder unit is constituted by these hydraulic master cylinder, application force converting mechanism and output distributing mechanism.

In the above-mentioned construction, it is advantageous that provided on the application force converting mechanism are a first rotating lever connected to the first brake operator via the independent brake system link mechanism and rotatable around a fixed fulcrum through operation of the first brake operator, and a knocker rotatable around the fixed fulcrum in a direction toward a cylinder hole opening of the hydraulic master cylinder through a pushing movement of the first rotating lever to thereby push a piston of the hydraulic master cylinder into the cylinder hole via a piston pushing portion.

In addition, in the above-mentioned construction, it is also advantageous that the interlocking brake system link mechanism is divided into a traction-side link mechanism linked to the second brake operator and a follower-side link mechanism linked to the mechanical brake and the output distributing mechanism is interposed between these traction-side link mechanism and follower-side link mechanism. Provided on this output distributing mechanism are a second rotating lever pivotally supported by the fixed fulcrum at an intermediate portion thereof and constructed so as to push the piston of the hydraulic master cylinder at one end thereof via the knocker, and an equalizer lever supported at the other end of the second rotating lever so as to oscillate thereat, while being pivotally supported at one end thereof by a floating fulcrum, and the traction-side link mechanism and follower-side link mechanism of the interlocking brake system link mechanism are connected to this equalizer lever.

In the construction above, it is preferable that a stopper is provided for regulating the rotation of the second rotating lever when the second rotating lever rotates in a direction in which the piston is pushed in.

In addition, in the construction above, it is preferable that the hydraulic brake is used as the front wheel brake, while the mechanical brake is used as the rear wheel brake, and a delay mechanism is provided for activating the hydraulic brake at a later timing than the mechanical brake when the hydraulic brake and the mechanical brake are activated in an interlocking fashion through operation of the second brake operator.

Further, in the construction above, it is also preferable that the first and second brake operators are constructed as a brake lever mounted on a handlebar, and the master cylinder unit is disposed between the handlebar and a front wheel.

Furthermore, in the construction above, it is advantageous that the delay mechanism comprises a return spring for elastically pulling the other end of the second rotating lever and the one end of the equalizer lever that are connected to the floating fulcrum in a predetermined direction.

BRIEF DESCRTPITON OF THE DRAWINGS

Fig. 1 is a schematic view showing an inoperative state of a brake device according to one embodiment of the present invention for a vehicle having a bar-type steering handle.

Fig. 2 is a front view showing a scooter-type vehicle having a bar-type steering handle in which the brake device according to the embodiment of the present invention shown in Fig. 1 is installed.

Fig. 3 is a partially sectional front view showing an inoperative state of a master cylinder unit according to the embodiment of the present invention.

Fig. 4 is an exploded perspective view showing the master cylinder unit according to the embodiment of the present invention.

Fig. 5 is a sectional view taken along line V-V of Fig 3 and showing the one embodiment of the present invention.

Fig. 6 is a partially sectional front view showing a state of the master cylinder unit according to the embodiment of the present invention in which only an independent brake system is operated.

Fig. 7 is a partially sectional front view showing a state of the master cylinder unit according to the embodiment of the present invention in which only an interlocking brake system is activated.

Fig. 8 is a partially sectional front view showing a state of the master cylinder unit according to the embodiment of the present invention in which both of the independent brake system and interlocking brake system are activated.

Fig. 9 is a schematic view of an application force converting mechanism and a output distributing mechanism explaining input and output distributions of the master cylinder unit according to the embodiment of the present invention.

DETAILED DESCRIPTION OF THE PREFERRED EMBODIMENTS

Referring to the accompanying drawings, an embodiment will be described below in which the present invention is applied to a scooter-type vehicle having a bar-type steering handle.

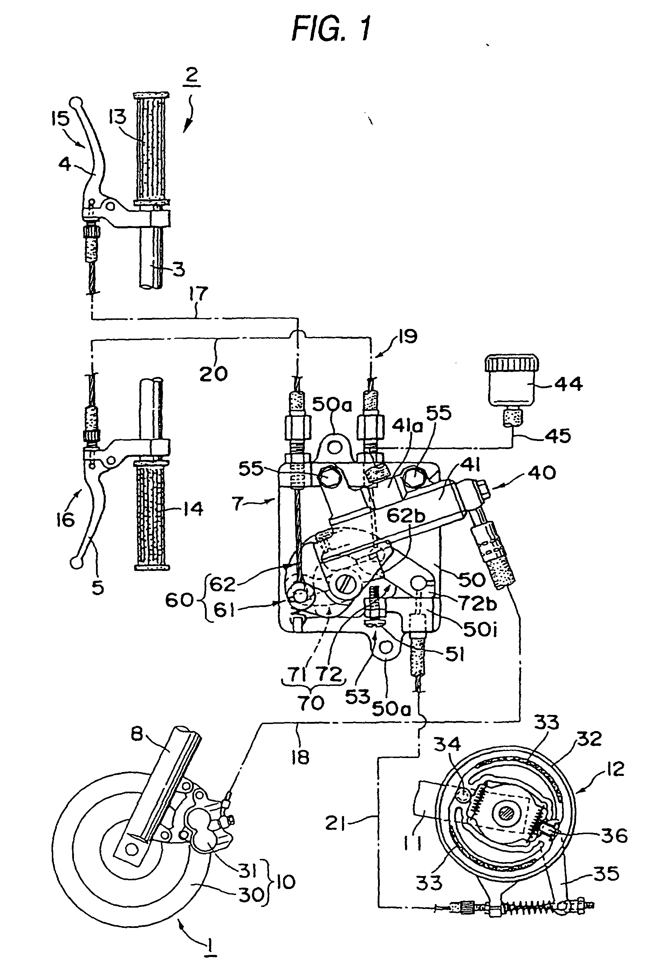

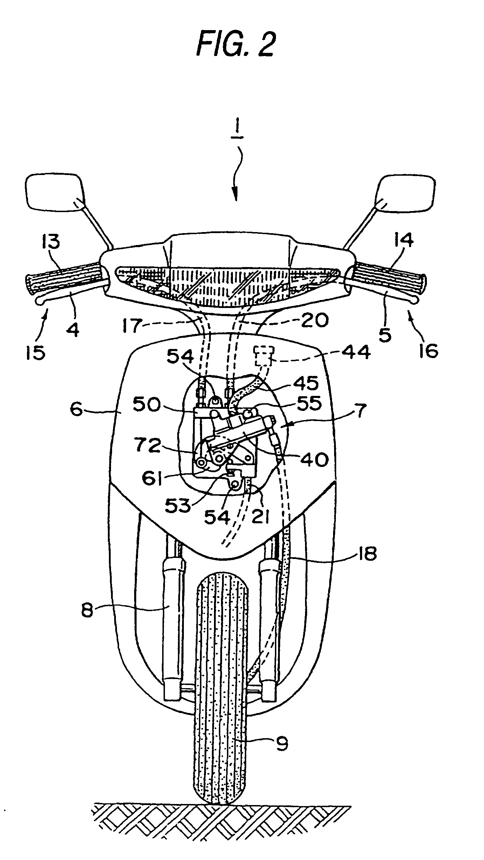

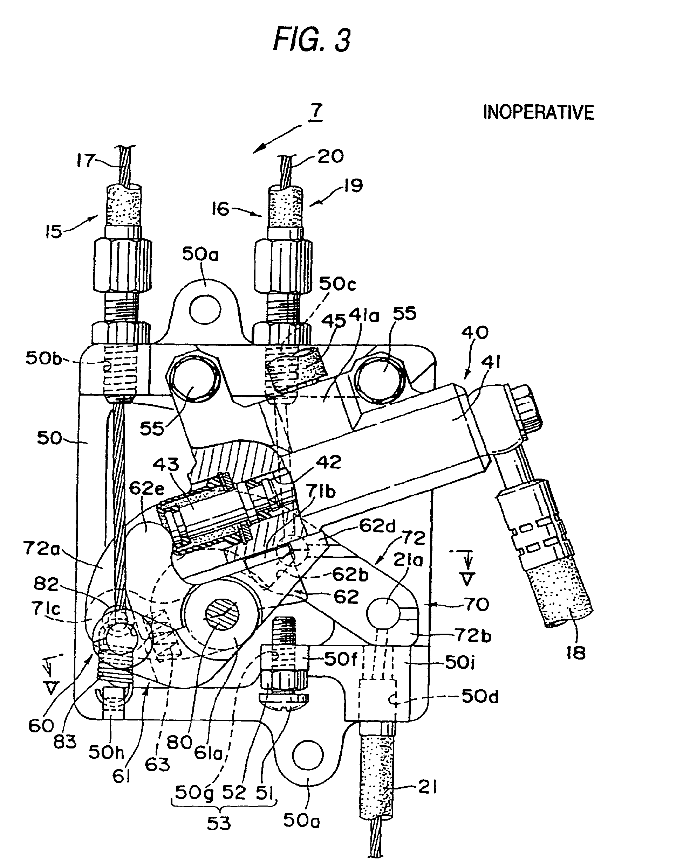

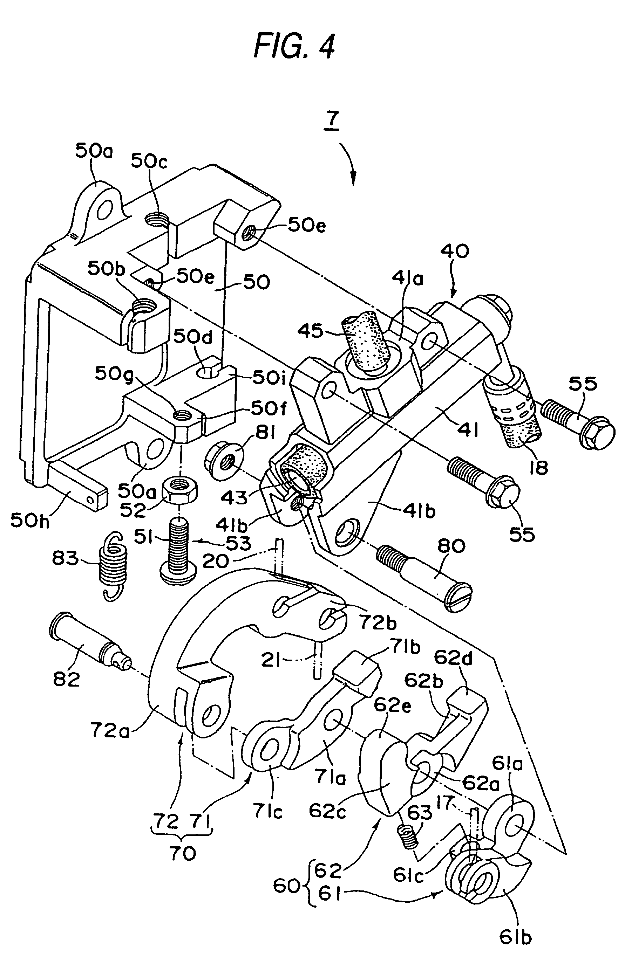

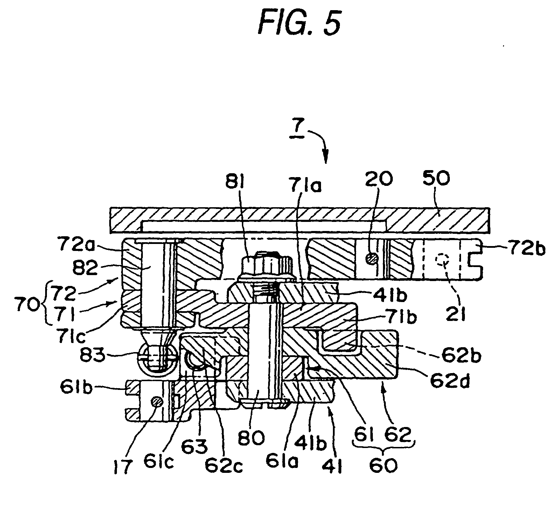

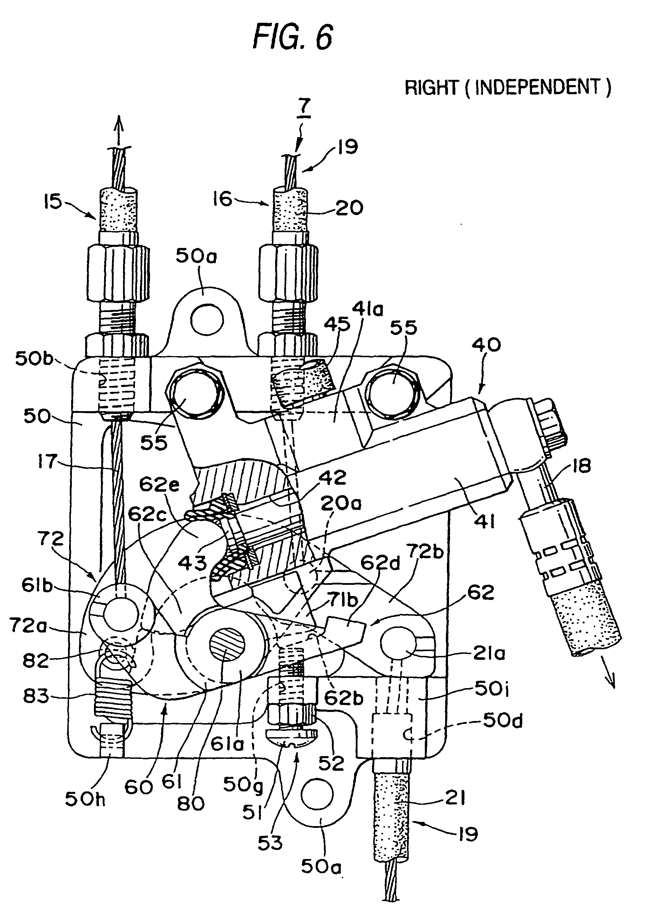

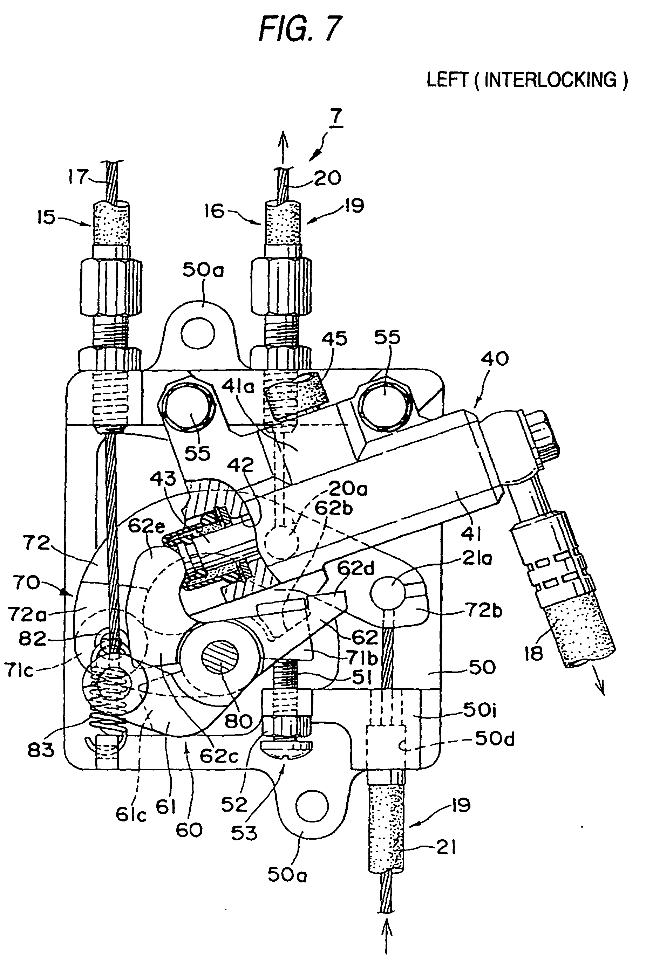

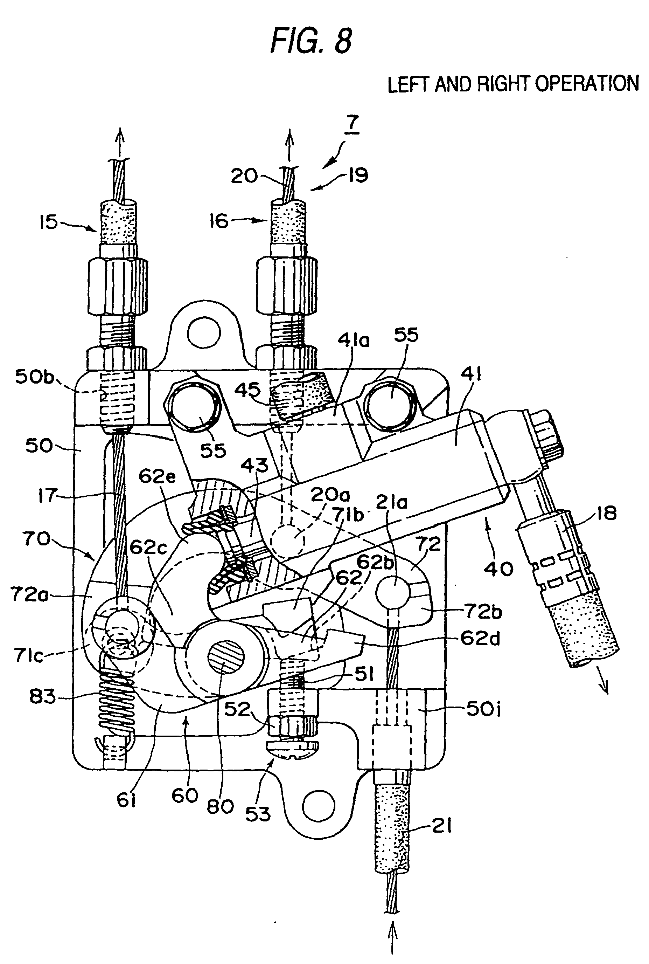

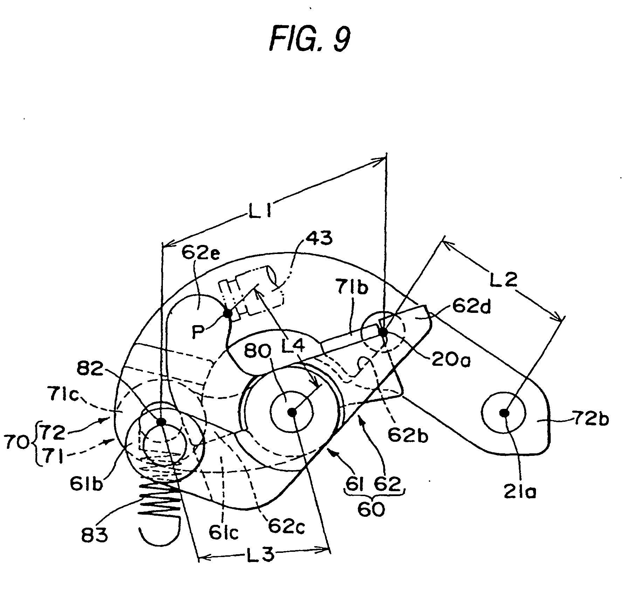

In the accompanying drawings, Fig. 1 is a schematic view showing the entirety of a brake device, Fig. 2 is a front view of a scooter-type vehicle having a bar-type steering handle on which the brake device of Fig. 1 is equipped, Fig. 3 is a partially sectional front view showing a state in which a master cylinder unit used in the brake device is not in operation, Fig. 4 is an exploded perspective view of the master cylinder unit, Fig. 5 is a sectional view taken along line V-V of Fig. 3, Fig. 6 is a partially sectional front view of the master cylinder unit with only an independent brake system being put in operation, Fig. 7 is a partially sectional front view of the master cylinder unit with only an interlocking brake system being put in operation, Fig. 8 is a partially sectional view of the master cylinder unit with both of the independent and interlocking brake systems being put in operation, and Fig. 9 is a schematic view showing an application force converting mechanism and an output distributing mechanism for explanation of input and output distributions by the master cylinder unit.

A brake device 2 for a vehicle 1 having a bar-type steering handle comprises a first brake operator 4 and a second brake operator 5 that are mounted on a handlebar 3 and a master cylinder unit 7 installed in a leg shield 6 for covering a front portion of a vehicle body, and a front wheel brake disposed on one side of a front wheel 9 at a lower end of a front fork 8 steered by the handlebar 3 is constructed as a hydraulic brake 10, while a rear wheel brake that is disposed in a rim of a rear wheel (both are not shown) or on one side of the rear wheel at a rear end of a swing arm 11 is constructed as a mechanical brake 12.

The first brake operator 4 is a right brake lever disposed forwardly of a throttle grip 13 mounted at a rightmost portion of the handlebar 3, and the second brake operator 5 is a left brake lever disposed forwardly of a fixed grip 14 mounted on a leftmost portion of the handlebar 3. The brake device 2 is a combination of an independent brake system 15 for independently activating the hydraulic brake 10 through gripping operation of the first brake operator 4 and a locking system brake circuit 16 for activating both of the hydraulic brake 10 and the mechanical brake 12 in an interlocking fashion through gripping operation of the second brake operator 5.

The independent brake system 15 is constituted by the first brake operator 4 and the hydraulic brake 10, a master cylinder unit 7, an independent brake system link mechanism 17 and a hydraulic pressure piping 18, and the interlocking brake system 16 is constituted by the second brake operator 5 and the hydraulic brake 10, the mechanical brake 12 and an interlocking brake system link mechanism 19, and in addition thereto the master cylinder unit 7 and the hydraulic pressure piping 18, which are used for the independent brake system 15 as well, are included in the locking system brake circuit 16.

For the hydraulic brake 10, a hydraulic disc brake is used which comprises a disc rotor 30 that rotates together with the front wheel 9 and a caliper body 31 combined with the disc rotor 30, and used for the mechanical brake 12 is a leading & trailing-type mechanical drum brake in which a pair of bake shoes 33, 33 are disposed so as to confront each other in a back plate 32 fixedly provided on a rear end of the swing arm 11 in an expandable and contractible fashion and the both brake shoes 33, 33 are expanded on an anchor pin 34 acting as a fulcrum. Moreover, a wire cable is used for the independent system link mechanism 17 and the interlocking brake system link mechanism 19, respectively.

The master cylinder unit 7 comprises a hydraulic master cylinder 40 for supplying a hydraulic pressure to the hydraulic brake 10 is fixedly provided on a vehicle body mounting bracket 50, an application force converting mechanism 60 for converting an input load from the first brake operator 4 into a hydraulic pressure of the hydraulic master cylinder 40, and an output distributing mechanism 70 for distributing an input load from the second brake operator 5 into a hydraulic pressure of the hydraulic master cylinder 40 and an application force of the mechanical brake 12, the application force converting mechanism 60 and the output distributing mechanism 70 being built on the hydraulic master cylinder 40.

Two mounting portions 50a, 50a are provided on the vehicle body mounting bracket 50 at upper and lower portions in such a manner as to protrude therefrom, and wire guides 50b, 50c, 50d each using an internally threaded hole are formed in the mounting bracket at two upper positions and one lower position thereof. In addition, formed in the mounting bracket at two upper positions thereof are internally threaded holes 50e, 50e for mounting the master cylinder thereat. When the master cylinder unit 7 is mounted on the vehicle body mounting bracket 50, mounting bolts 54, 54 are put through the mounting portions 50a, 50a of the vehicle mounting bracket 50 so as to be screwed into the vehicle body, whereby the master cylinder unit 7 is mounted inside the leg shield 6 at the front portion of the vehicle body.

A guide piece 50f is provided at a lower portion of the vehicle body mounting bracket 50 in such a manner as to protrude therefrom, and an internally threaded hole 50g is formed so as to pass through the guide piece 50f vertically, and this internally threaded hole 50g, an adjusting bolt 51 screwed into this internally threaded hole 50g and a locking nut 52 for fixing the adjusting bolt 51 constitute a stopper 53 according to the present invention. The adjusting bolt 51 is constructed so as to support a second rotating lever 71 of the application force converting mechanism 60, which will be described later, when the interlocking brake system 16 is in operation, to thereby regulate a distance along which a piston of the hydraulic master cylinder 40 is pushed in by a knocker 62, whereby an application force for the front wheel brake 10 is set. Thus, the application force of the front wheel brake 10 can be changed by adjusting the protruding distance of the adjusting bolt 51 from the guide piece 50f.

The first brake operator 4 is connected to the application force converting mechanism 60 of the master cylinder unit 7 via the independent brake system link mechanism 17, and the hydraulic brake 10 and the hydraulic master cylinder 40 are connected to each other via the hydraulic pressure piping 18. The interlocking brake system link mechanism 19 is divided into a traction-side link mechanism 20 linked to the second brake operator 5 and a follower-side link mechanism 21 linked to the mechanical brake 12, and the output distributing mechanism 70 is interposed between the traction-side link mechanism 20 and follower-side link mechanism 21.

The hydraulic master cylinder 40 is mounted on the vehicle body mounting bracket 50 such that a cylinder body 41 is mounted thereon at two upper locations with mounting bolts 55, 55 in an inclined fashion, and a bottomed cylinder hole 42 is formed in the cylinder body 41 so that an opening thereof is oriented downwardly. A piston 43 is liquid tightly and movably inserted into the cylinder hole 42 on the opening side, and the piston 43 is biased in a direction toward the opening of the cylinder hole 42 by virtue of a spring-back force of a return spring provided in a contracted state in a hydraulic pressure chamber (the spring and chamber are both not shown) formed between an upper bottom wall of the cylinder hole 42 and the piston 43.

The hydraulic pressure piping 18 communicating with the hydraulic pressure chamber is connected to the upper bottomwall of the cylinder body 41 and a liquid communication pipe 45 is connected to a boss portion 41a protruding upwardly from an upper portion of a circumferential wall of the cylinder body 41 so as to establish a communication between the cylinder hole 42 and a separate reservoir 44. A pair of lever holders 41b, 41b are provided on the cylinder body 41 on the cylinder hole opening side in such a manner as to suspend therefrom, and a first rotating lever 61 and the knocker 62 of the application force converting mechanism 60 and the second rotating lever 71 of the output distributing mechanism 70 are pivotally supported between the lever holders 41b, 41b using a fixed fulcrum 80 and a nut 81.

The application force converting mechanism 60 comprises a lever mechanism constituted by the aforementioned first rotating lever 61 and the plate-like knocker 62, and one end 61a of the first rotating lever 61 and an intermediate portion 62a of the knocker 62 are pivotably supported at the fixed fulcrum 80. The other end 61b of the first rotating lever 61 is provided in such a manner as to protrude below the wire guide 50b of the vehicle body mounting bracket 50, and the independent brake system link mechanism 17 taken in from the wire guide 50b is connected to the other end 61b. A knocker engagement portion 61c is provided between the one end 61a and the other end 61b for engagement with the other end 62c of the knocker 62.

In the knocker 62, a lever engagement portion 62b and a stopper piece 62d are provided from the intermediate portion 62a to one end thereof, and the other end 62c and a piston pushing portion 62e are provided from the intermediate portion 62a to the other end thereof. The lever engagement portion 62b and the stopper piece 62d formed outwardly continuously therewith are disposed below the cylinder body 41, and the other end 62c is disposed above the knocker engagement portion 61c of the first rotating lever 61, the piston pushing portion 62e that extends upwardly from the other end 62c being disposed in such a manner as to be brought into abutment at a leading end thereof with an external end of the piston 43 protruding from the cylinder hole 42.

A first return spring 63 is provided in a contracted state between the knocker engagement portion 61c of the first rotating lever 61 and the other end 62c of the knocker 62, so that the first rotating lever and the knocker 62 are sprung back from each other in reverse directions without any looseness and the independent brake system link mechanism 17 linked to the first rotating lever is extended with no looseness.

When the first brake operator 4 is not grip operated with the application force converting mechanism 60 being inoperative, the spring-back force of the return spring contained in the hydraulic pressure chamber is allowed to act on the knocker 62 that is in abutment at the piston pushing portion 62e with the piston 43, and the knocker 62 and the first rotating lever 61 that is in engagement at the knocker engagement portion 61c with the other end 62c of the knocker 62 are rotated around the fixed fulcrum 80 in an inoperative direction (counterclockwise in Fig. 1), this bringing the stopper piece 62d of the knocker 62 into abutment with a lower side of the cylinder body 41, whereby retreat positions of the piston 43, and the first rotating lever and the knocker 62 are regulated, respectively (Fig. 3).

Then, when the first brake operator 4 is grip operated, the first rotating lever 61 to which the independent brake system link mechanism 17 is linked is rotated around the fixed fulcrum 80 in an operative direction (clockwise in Fig. 3), and the knocker 62 which is in abutment at the other end 62c with the knocker engagement portion 61c of the first rotating lever 61 is then rotated in the same direction as that in which the first rotating member is rotated, whereby the piston pushing portion 62e of the knocker 62 pushes the piston 43 of the hydraulic master cylinder 40 in a direction toward the bottom of the cylinder hole 42.

The output distributing mechanism 70 is a lever mechanism for distributing an input load from the second brake operator 5 into a hydraulic pressure for the hydraulic pressure brake and a traction force for the mechanical brake as an output load by pulling the traction-side link mechanism 20 of the interlocking brake system link mechanism 19 through a grip operation of the second brake operator 5 and branching the traction force of the traction-side link mechanism 20 into the hydraulic pressure piping 18 for the hydraulic brake and the follower-side link mechanism 21 for the mechanical brake, and in this embodiment the output distributing mechanism 70 is a combination of the aforementioned second rotating lever 71 pivotably supported on the fixed fulcrum 80 at an intermediate portion 71a thereof and a plate-like equalizer lever 72 interposed between the vehicle body mounting bracket 50 and one of the lever holders 41b of the cylinder body 41.

A knocker engagement portion 71b is provided at one end of the second rotating member 71, and the other end 71c of the second rotating lever 71 and one end 72a of the equalizer lever 72 are pivotably supported on a floating fulcrum 82 using a supporting shaft, a second return spring 83 acting as a delay mechanism according to the present invention being provided between the floating fulcrum 82 and a guide piece 50h of the vehicle body mounting bracket 50 in such a manner as to be extended therebetween.

The knocker engagement portion 71b provided on the one end of the second rotating lever 71 is disposed between the cylinder body 41 and the lever engagement portion 62b of the knocker 62 and the traction-side link mechanism 20 and the follower-side link mechanism 21 of the interlocking brake system link mechanism 19 that are taken in, respectively, from the wire guides 50c, 50d are connected to a side of the other end 72b of the equalizer lever 72 at one ends 20a, 21a thereof, respectively.

The adjusting bolt 51 acting as the stopper 53 is provided adjacent to a side of the vehicle body mounting bracket of the knocker 62 below the knocker engagement portion 71b of the second rotating lever 71, and the knocker engagement portion 71b of the second rotating lever 71 is formed along the overall width between the adjusting bolt 51 and the lever engagement portion 62b of the knocker 62.

When the second brake operator 5 is not grip operated with the output distributing mechanism 70 being inoperative, the knocker engagement portion 71b of the second rotating lever 71 is brought into engagement with the lever engagement portion 62b of the knocker 62 that is rotated around the fixed fulcrum 80 in an inoperative direction (counterclockwise in Fig. 1), and the second rotating lever 71 is rotated together with the knocker 62 in the same direction as that in which the knocker 62 is rotated, this bringing the stopper piece 62d of the knocker 62 into abutment with the lower side of the cylinder body 41, retreat limits therefor being thereby regulated. In addition, the equalizer lever 72 connected to the second rotating lever 71 via the floating fulcrum 82 is regulated (Fig. 3) with respect to a retreat limit therefor in a state in which the other end 72b thereof is brought into abutment with a stopper wall 50i of the vehicle body mounting bracket 50 by virtue of a tensile force of the follower-side link mechanism 21 of the interlocking brake system link mechanism 19.

The follower-side link mechanism 21 is connected to the other end 72b of the equalizer lever 72, and the traction-side link mechanism 20 is connected to the equalizer lever 72 at a position closer to an intermediate portion than to the other end 72b. The floating fulcrum 82, a connecting point of the second rotating lever 71 and the equalizer lever 72, is constructed such that when an application force is applied to either of the both levers 71, 72, the second rotating lever transmits the application force so applied to the one of the levers to the other lever while rotating around the fixed fulcrum 80.

The second return spring 83 extended between the guide piece 50h of the vehicle body mounting bracket 50 and the floating fulcrum 82 pulls the other end 71c of the second rotating lever 71 and the one end 72a of the equalizer lever 72 that are connected to the floating fulcrum 82 in a direction of the guide piece 50h (in a downward direction in Fig. 3) at a set load that is greater than a traction force acting on the other end 72b of the equalizer lever 72 from the follower-side link mechanism 21. In addition, when the second brake operator 5 is grip operated, the equalizer lever 72 linked to the traction-side link mechanism 20 of the interlocking brake system link mechanism 19 is rotated on the floating fulcrum 82 as a fulcrum in an operative direction (counterclockwise in Fig. 3) and pulls the follower-side link mechanism 21 of the interlocking brake system link mechanism 19, and at a stage in which the traction resistance of the follower-side link mechanism 21 exceeds the set load of the second return spring 83, the second return spring 83 is extended and the floating fulcrum 82 moves upwardly in Fig. 3, whereby the second rotating lever 71 and the knocker 62 are rotated around the fixed fulcrum 80 in an operative direction (clockwise in Figs. 1 and 3).

This moves the equalizer lever 72 substantially in parallel in a direction toward the traction-side link mechanism 20 of the interlocking brake system link mechanism 19 (upwardly in Fig. 3), and pulls further the follower-side link mechanism 21, and the piston pushing portion 62e of the knocker 62 pushes the piston 43 of the hydraulic master cylinder 40 along the cylinder hole 42 toward the bottom thereof.

In addition, in an inoperative state in which the second brake operator 5 is not grip operated, the knocker engagement portion 71b of the second rotating lever 71 is spaced away upwardly from the adjusting bolt 51 as the stopper 53, and when the second rotating lever 71 and the knocker 62 are rotated in the operative direction as described above through a grip operation of the second brake operator 5, the knocker engagement portion 71b of the second rotating lever 71 is brought into abutment with the adjusting bolt 51, whereby the rotating distance of the second rotating lever 71 and the knocker 62 is regulated , the push-in distance of the piston of the hydraulic master cylinder 40 by the knocker 62 being thereby regulated.

The embodiment of the present invention is constructed as described heretofore, and in an inoperative state in which the first and second brake operators 4, 5 are not grip operated, the respective constituent members of the brake device 2 are positioned in a state illustrated in Figs. 1 to 3.

Then, referring to Fig. 6, an operation of the independent brake system 15 using the first brake operator 4 will first be described. The independent brake system link mechanism 17 is pulled when the first brake operator 4 is grip operated, and the first rotating lever 61 of the application force converting mechanism 60 is rotated around the fixed fulcrum 80 in an operative direction (clockwise in Fig. 6), and the knocker 62 is rotated together with the first rotating lever 61 around the fixed fulcrum 80 in the operative direction (clockwise in Fig. 6) with the output distributing mechanism 70 being left at an inoperative position (position shown in Figs. 1 to 3) due to the abutment of the knocker engagement portion 61c with the other end 62c, the piston pushing portion 62e then pushing in the piston 43 of the hydraulic master cylinder 40 along the cylinder hole 42 in the direction toward the bottom thereof, thereby increasing the pressure of a hydraulic fluid in the hydraulic pressure chamber at the bottom of the cylinder hole 42. The hydraulic fluid, the pressure of which has been increased in the hydraulic pressure chamber, is sent to the caliper body 31 of the hydraulic brake 10 via the hydraulic pressure piping 18 (Fig. 1), and the caliper body 31 is hydraulically activated , whereby a braking force is applied to the front wheel 9 (Fig. 2).

Next, referring to Fig. 7, an operation of the interlocking brake system 16 using the second brake operator 5 will be described. When the traction-side link mechanism 20 of the interlocking brake system link mechanism 19 is pulled through a grip operation of the second brake operator 5, the equalizer lever 72 of the output distributing mechanism 70 is rotated in an operative direction (clockwise in Fig. 7) around the floating fulcrum 82 at the one end 72a, with the other end 72b being floated from the stopper wall 50i of the vehicle body mounting bracket 50, and pulls the follower-side link mechanism 21 connected to the other end 72b.

The follower-side link mechanism 21 pulled by the equalizer lever 72 rotates an operating lever 35 of the mechanical brake 12 in the operative direction, and a cam shaft 36 integral with the operating lever 35 expands the brake shoes 33, 33 to thereby apply a braking force to the rear wheel.

At this moment, although a traction force is produced in the equalizer lever 72 which moves the floating fulcrum 82 upwardly as viewed in Fig. 7, since a tensile force is applied to the floating fulcrum 82 by the second return spring 83 that moves the other end 71c of the second rotating lever 71 ad the one end 72a of the equalizer lever 72 downwardly as seen in Fig. 7, as long as the traction force acting on the other end 72b of the equalizer lever 72 does not exceed the tensile force of the return spring 83, the second rotating lever 71 is not rotated from the inoperative position.

The operating force of the mechanical brake 12 acts as a traction resistance on the other end 72b of the equalizer lever 72 via the follower-side link mechanism 21, and when this traction resistance exceeds the tensile force of the second return spring 83, the second return spring 83 is extended, and the floating fulcrum 82 moves from the position in Fig. 3 to the position in Fig. 7 to thereby rotate the second rotating lever 71 around the fixed fulcrum 80 in the operative direction (clockwise in Fig. 7). Then, the knocker engagement portion 71b of the second rotating lever 71 pushes the lever engagement portion 62b of the knocker 62, and the piston pushing portion 62e of the knocker 62 pushes in the piston 43 of the hydraulic master cylinder 40 along the cylinder hole 42 toward the bottom thereof, whereby as with the operation of the aforementioned independent brake system 15, the hydraulic fluid in the hydraulic pressure chamber is supplied to the caliper body 31of the hydraulic brake 10 to thereby apply a braking force to the front wheel 9.

On the other hand, when the floating fulcrum 82 is moved through extension of the second return spring 83, the equalizer lever 72 itself is moved upwardly substantially in parallel, and the follower-side link mechanism 21 connected to the other end 72b thereof is further pulled, the application force of the mechanical brake 12 being thereby further enhanced. The rotating distance of the second rotating lever 71 is regulated when the knocker engagement portion 71b is brought into abutment with the adjusting bolt 51 as the stopper 53, and this stops the rotation of the knocker 62, whereby the operation of the hydraulic brake 10 is regulated (Fig. 7).

As is described above, with the interlocking brake system 16 being operative, an input load from the second brake operator 5 is distributed by the output distributing mechanism 70 into output loads to the hydraulic brake 10 and the mechanical brake 12, and the hydraulic brake 10 and the mechanical brake 12 are activated in an interlocking fashion.

Fig. 8 shows a case in which both of the independent brake system 15 and the interlocking brake system 16 are activated by grip operating the first and second brake operators 4, 5, and the hydraulic brake 10 that is activated by either of these brake systems 15, 16 is activated by the sum of grip operations of the first brake operator 4 and the second brake operator 5 until the knocker portion 71b of the second rotating lever 71 is brought into abutment with the adjusting bolt 51.

In addition, when the interlocking brake system 16 is activated by operating both of the brake operators 4, 5, the rotation of the knocker 62 is stopped in a stage in which the knocker engagement portion 71b of the second rotating lever 71 of the output distributing mechanism 70 is brought into abutment with the adjusting bolt 51 of the stopper 53, while when the independent brake system 15 is activated, the first rotating lever 61 of the application force converting mechanism 60 pulled by the independent brake system link mechanism 17 continues to rotate the knocker 62 around the fixed fulcrum 80 in the operative direction with the output distributing mechanism 70 being left in the aforementioned stopped state, and the hydraulic fluid pressurized in the hydraulic pressure chamber at the bottom of the cylinder hole 42 is supplied to the hydraulic brake 10, whereby braking of the front wheel 9 through the operation of the hydraulic brake 10 continues to be increased.

Next, referring to Figs. 6 to 8, a case will be described in which the interlocking brake system 16 is activated after the independent brake system 15 has been activated.

With the independent brake system 15 being activated first, the braking of the front wheel 9 by the hydraulic brake 10 is carried out as described above, and the lever engagement portion 62b of the knocker 62 is spaced away from the knocker engagement portion 71b of the second rotating lever 71 while the first rotating lever 61 of the application force converting mechanism 60 keeps the knocker 62 rotating around the fixed fulcrum 80 (Fig. 6). With the interlocking brake system 16 being put in operation following the activation of the independent brake system 15 , the equalizer lever 72 of the output distributing mechanism 70 pulls the follower-side link mechanism 21 through a grip operation of the second brake operator 5, whereby braking is effected on the rear wheel by the mechanical brake 12.

The hydraulic brake 10 continues to be activated by the interlocking brake system 16 until the traction force of the equalizer lever 72 overcomes the tensile force of the second return spring 83, whereby the floating fulcrum 83 is moved upwardly, the knocker engagement portion 71b of the second rotating lever 71 following the lever engagement portion 62b of the knocker 62 being brought into abutment with the adjusting bolt 51 of the stopper 53 to thereby regulate the rotation of the second rotating lever 71, and thereafter, only the independent brake system 15 continues to operate the hydraulic brake 10.

Furthermore, in a case where the interlocking brake system 16 is activated first, the braking of the front wheel 9 by the hydraulic brake 10 and the braking of the rear wheel by the mechanical brake 12 are then being carried out as described above (Fig. 7), and in a case where the independent brake system 15 is activated thereafter, and an input load from the first brake operator 4 becomes greater than an input from the second brake operator 5, the lever engagement portion 62b of the knocker 62 is separated from the knocker engagement portion 71b of the second rotating lever 71 which is regulated with respect to rotation due to the abutment with the adjusting bolt 51, and the piston pushing portion 62e of the knocker 62 pushes alone the piston 43 of the hydraulic master cylinder 40, whereby the hydraulic brake 10 is activated by the independent brake system 15.

with the output distributing mechanism 70 using the lever mechanism according to the embodiment of the invention, during the activation of the interlocking brake system 16, it is possible to make the total output loads to the hydraulic brake 10 and the mechanical brake 12 greater or smaller than the input load from the second brake operator 5 while the input load from the second brake operator 5 is being distributed as output loads to the hydraulic brake 10 and the mechanical brake 12, and assuming;

$W_i$ = an input load from the second brake operator 5,
$W_f$ = an output load to the hydraulic brake 10,
$W_r$ = an output load to the mechanical brake 12,
$W_s$ = a load acting on the floating fulcrum 82,
$P$ = an abutment point of the piston pushing portion 62e of the knocker 62 with the piston 43,
$W_p$ = a tensile force of the second return spring 83,
$L_1$ = a distance between the floating fulcrum 82 and the one end 20a of the traction-side link mechanism 20,
$L_2$ = a distance between the one end 20a of the traction-side link mechanism 20 and the one end 21a of the follower-side link mechanism 21,
$L_3$ = a distance between the fixed fulcrum 80 and the floating fulcrum 82, and
$L_4$ = a distance between the fixed fulcrum 80 and the abutment point P,
the following equations are obtained;

$$W_i = W_r + W_s \quad \cdots \quad \text{equation (1),}$$

$$W_s \times L_1 = W_r \times L_2 \quad \cdots \quad \text{equation (2),}$$

$$W_s \times L_3 = W_r \times L_4 \quad \cdots \quad \text{equation (3).}$$

However, as condition No. 1, until the knocker engagement portion 71b of the second rotating lever 71 is moved and brought into abutment with the adjusting bolt 51 of the stopper 53, from the above equations (1) and (2), the input load $W_i$ continues to be distributed at a ratio of $W_r : W_s = L_1 : L_2$.

However, since the tensile force $W_p$ of the second return spring 83 is applied to the floating fulcrum 82 in a direction in which the floating fulcrum 82 is brought into abutment with the inoperative position, when $W_s \leq W_p$, the second rotating lever 71 is not rotated, and therefore the output load $W_r$ is not distributed to the hydraulic brake 10.

On the other hand, in relation to the fact that the input load $W_i$ is expressed by

$$W_i \times L_1 = W_r \times (L_1 + L_2) \quad \cdots \quad \text{equation (4),}$$

the output load $W_r$ to the mechanical brake 12 is distributed at a ratio of $W_i : W_r = (L_1 + L_2) : L_1$.

In addition, when the load $W_s$ acting on the floating fulcrum 82 overcomes the tensile force $W_p$ of the second

return spring 83 (Ws>Wp), the output load Wr to the mechanical brake 12 is distributed from the above equations (1) and (2) at a ratio of Wr:Ws=L1:L2, and

from the above equation (3), the output load Wf to the hydraulic brake 10 is determined by the load of Ws and a ratio of L3:L4.

Furthermore, as condition No. 2, after the knocker engagement portion 71b of the second rotating lever 71 is brought into abutment with the adjusting bolt 51 of the stopper 53, since the rotation of the second rotating lever 71 is regulated, the output load Wf becomes unavailable again for distribution to the hydraulic brake 10, and

from the relationship with the above equation (4), for the output load Wr to the mechanical brake 12 the input load Wi is distributed at a ratio of

$$\text{Wi:Wr}=(\text{L1}+\text{L2}):\text{L1}.$$

Now, the above equation (4) can easily be obtained from the above equations (1) and (2), and the output load Wr to the mechanical brake 12 is always proportional to the input load Wi whether or not the knocker engagement portion 71b of the second rotating lever 71 is brought into abutment with the stopper 53.

For instance, assuming the input load from the second brake operator 5 Wi=1, the distance L1=L2=L4=1, and the distance L3=2, it follows that;

the output load to the hydraulic brake 10 Wf=1.0,

the output load to the mechanical brake 12 Wr=0.5, and the sum of the output loads Wf+Mr is increased to become 1.5 times larger than the input load Wi.

As has been described heretofore, according to this embodiment, in operating the interlocking brake system 16, while the input load from the second operator 5 is distributed by the output distributing mechanism 70 as output loads to the hydraulic brake 10 and the mechanical brake 12, the sum of output loads to the hydraulic brake 10 and the mechanical brake 12 can be made greater or smaller than the input load from the second brake operator 5 by the output distributing mechanism 70 of the lever mechanism, thereby making it possible to set preferable braking forces at the hydraulic brake 10 and the mechanical brake 12, respectively, which match the vehicle body condition and performance, and application purpose that are set for the vehicle 1 having a bar-type steering handle.

The present invention can be applied to another vehicle having a bar-type steering handle only by modifying the lever ratio of the second rotating lever 71 and the equalizer lever 72 of the output distributing mechanism 70, and thus, since there is no need to replace the front and rear brakes by those having different performances, more preferable braking forces can be set at inexpensive costs and an extremely high versatility in practical use can be provided.

In addition, according to the embodiment of the present invention, since the first rotating lever 61 and the knocker 62 of the application force converting mechanism 60 and the second rotating lever 71 of the output distributing mechanism 70 are disposed at a narrow area for overlapping thereat by pivotably supporting those three components on the single fixed fulcrum 80, the entirety of the master cylinder unit 7 can be formed light in weight and compact in size.

Moreover, when it is rotated around the fixed fulcrum 80 in the direction in which the piston is pushed in, the rotation of the second rotating lever 71 is regulated by the stopper 53, whereby a reaction force is imparted to the second rotating lever 71 brought into abutment with the stopper 53 so as to activate the equalizer lever 72 pivotably supported on the second rotating lever 71 via the floating fulcrum 82, thereby making it possible to ensure that the rear wheel braking is performed by the mechanical brake 12.

Furthermore, the hydraulic brake 10 is used for the front wheel and the mechanical brake 12 is used for the rear wheel, and the second return spring 83 is disposed between the floating fulcrum 82 and the guide piece 50h of the vehicle body mounting bracket 50 in such a manner as to be extended therebetween. In this construction, when interlocking the hydraulic brake 10 with the mechanical brake 12 through a grip operation of the second brake operator 5, the hydraulic brake 10 is constructed to be activated at a delayed timing after the mechanical brake 12 has been activated first, and this allows the braking force of the mechanical brake 12 to effectively be applied to the rear portion of the vehicle body where the load still remains before it moves to the front side of the vehicle body, whereby the concentration of braking forces to the front portion of the vehicle body can be avoided, thereby making it possible not only to obtain an ideal braking force distribution over the vehicle having a bar-type steering handle but also to improve the operating feeling at the time of braking in an interlocking fashion.

In addition, according to the embodiment of the present invention, since the master cylinder unit 7 integrally comprising the hydraulic master cylinder 40, the application force converting mechanism 60 and the output distributing mechanism 70 is installed in the leg shield 6 positioned at an intermediate height between the handlebar 3 to which the first and second brake operators 4, 5 are mounted and the front wheel 9, the lay-out of the independent brake system link mechanism 17, the traction-side link mechanism 20 and the follower-side link mechanism 21 of the interlocking brake system link mechanism 19 and the hydraulic pressure piping 18 can be attained within the shortest distance, thus providing excellent assembling workability, serviceability, and economy. Moreover, since the master cylinder unit 7 is not exposed to the outside of the vehicle body, not only can the external appearance of the vehicle be processed beautifully but also the master cylinder unit 7 can be protected against an external force, weather and dust, thereby making it possible to provide good durability.

Now, in this embodiment of the present invention, the output distributing mechanism is described as being constructed such that the other end of the second rotating lever and the one end of the equalizer lever are pivotably supported on the floating fulcrum, the traction-side link mechanism of the interlocking brake system link mechanism being connected to the intermediate portion of the equalizer lever and the follower-side link mechanism of the interlocking brake system link mechanism also being connected to the intermediate portion of the equalizer lever, but the connecting positions of the traction-side link mechanism and the follower-side link mechanism to the equalizer lever may be changed over with each other.

In addition, in the above-described embodiment, the stopper may be omitted which rotatably supports the second rotating lever of the output distributing mechanism. In this case, if the second rotating lever is constructed so as to rotate following the piston of the hydraulic master cylinder, the second rotating lever can be imparted a reaction force directly from the piston at its limit of movement or via the knocker at its limit of rotation. Furthermore, the delay mechanism and the stopper of the present invention may be constructed differently from those described above. In addition, the adjusting bolt is not necessarily used for the stopper, and the second rotating lever may be constructed such that it is simply brought into abutment with a wall surface or the like.

Moreover, the hydraulic brake and the mechanical brake may be applied to the front and rear wheel brakes in a reverse fashion to that described in the above embodiment. Either or both of the first and second brake operators may be converted into a brake pedal, and as a link mechanism for the independent brake system and the interlocking brake system, a plurality of rods may be connected to each other or a combination of wire cables and rods may be used.

In addition, the piston pushing portion of the knocker may be spaced away from the piston of the hydraulic master cylinder. If the master cylinder unit is disposed at an intermediate height between the handlebar and the front wheel, it can provide an advantage that the lay-out of piping and wiring can be attained within the shortest distance, and moreover if it is installed in the body covering such as the leg shield, with the scooter-type vehicle having a bar-type steering handle, the master cylinder unit can more preferably be protected against an external force, weather and dust. However, the present invention is not such that it prevents the disposition of the master cylinder unit at locations other than between the handlebar and the front wheel.

As explained above, in accordance with the present invention it is possible to provide a brake device for a vehicle having a bar-type steering handle in which when interlocking a first wheel brake such as a hydraulic brake and a second wheel brake such as a mechanical brake, output loads to the first wheel brake and the second wheel brake can be increased or decreased so as to become greater or smaller than an input load from a brake operator, thereby making it possible to set a preferable brake force that can match a certain vehicle body condition and performance, and purpose of application.

As has been described heretofore, according to a preferable embodiment of the invention when activating the hydraulic brake and the mechanical brake in an interlocking fashion, since the sum of output loads to the hydraulic brake and the mechanical brake can be made greater or smaller than an input load from the interlocking brake operator by adjusting the lever ratio of the lever mechanism used in the output distributing mechanism, while distributing by the outlet distributing mechanism the input load so inputted from the interlocking brake operator as output loads to the hydraulic brake and the mechanical brake, it is possible to set preferable braking forces at the hydraulic brake and the mechanical brake, respectively, that can match the vehicle body condition and performance of a vehicle having a bar-type steering handle and a purpose the application thereto.

Moreover, with the target hydraulic brake and mechanical brake for a vehicle having a bar-type steering handle, a preferable braking force can be obtained at inexpensive costs only by modifying the lever ratio of the lever mechanism used in the output distributing mechanism, and therefore an extremely high versatility in practical use can be provided. Moreover, since the first rotating lever and the knocker of the application force converting mechanism and the second rotating lever of the output distributing mechanism are disposed so as to be overlapped one another at a limited area by pivotably supporting those three components on the single fixed fulcrum, the entirety of the master cylinder unit can integrally be constructed light in weight and compact in size.

In addition, according to a preferable embodiment of the invention, when the second rotating lever is rotated around the fixed fulcrum in the direction in which the piston is pushed in, the rotation of the second rotating lever is regulated with the stopper, and this imparts a reaction force to the second rotating lever when the lever is brought into abutment with the stopper so as to activate the equalizer lever pivotably supported on the second rotating lever via the floating fulcrum, thereby making it possible to ensure that the mechanical brake performs required braking.

Moreover, according to a preferable embodiment of the invention, since it is possible to avoid a risk of braking forces concentrating to the front portion of the vehicle body by allowing the braking force of the mechanical brake to effectively act on the rear portion of the vehicle body where the load still remains before it is moved to the front side of the vehicle body, not only is it possible to obtain an ideal braking force distribution over the entirety of the vehicle having a bar-type steering handle but also to improve the operation feeling at the time of interlocking braking.

In addition, according to a preferable embodiment of the invention, since the lay-out of the independent brake system link mechanism, the traction-side link mechanism and follower-side link mechanism of the interlocking brake system link mechanism and the hydraulic pressure piping for use for the hydraulic brake can be attained within the shortest distance, excellent assembling workability, serviceability and economy can be provided.

**Claims**

1. A brake device for a vehicle having a barhandle, **characterized by** comprising:

   a hydraulic brake (10) for braking a first wheel of said vehicle;
   a hydraulic master cylinder (40) connected to said hydraulic brake (10) and producing a hydraulic pressure, said hydraulic master cylinder (40) accommodating a piston (43) being movable therein;
   a first brake operator (4) for operating said hydraulic brake (10) through said hydraulic pressure of said hydraulic master cylinder (40);
   an independent brake system link mechanism (17) for linking said first brake operator (4) and said hydraulic master cylinder (40), to thereby operate said hydraulic master cylinder (40);
   a mechanical brake (12) for braking a second wheel of said vehicle;
   a second brake operator (5) for operating said mechanical brake;
   an interlocking brake system link mechanism (19) for linking said second brake operator (5) and saidmechanical brake (12);
   an application force converting mechanism (60) for converting an input load from said first brake operator (4) into said hydraulic pressure of said hydraulic master cylinder; and
   an output distributing mechanism (70) for distributing an input from said second brake operator (5) into said hydraulic pressure of said hydraulic master cylinder and an application force of said mechanical brake.

2. The brake device for a vehicle having a barhandle according to claim 1, **characterized in that** said application force converting mechanism (60) comprises:

   a first rotating lever (61) connected to said first brake operator (4) via said independent brake system link mechanism (17) and rotatable around a fixed fulcrum (80) through operation of said first brake operator (4); and
   a knocker (62) rotatable around said fixed fulcrum (80) in a direction toward a cylinder hole opening of said hydraulic master cylinder (40) through a pushing movement of said first rotating lever (61) to thereby push said piston (43) of said hydraulic master cylinder (40) into said cylinder hole via a piston pushing portion.

3. The brake device for a vehicle having a barhandle according to claim 1, **characterized in that** said interlocking brake system link mechanism comprises:

   a traction-side link mechanism (20) linked to said second brake operator;
   a follower-side link mechanism (21) linked to said mechanical brake, said output distributing mechanism (70) being interposed between said traction-side link mechanism (20) and said follower-side link mechanism (21) ;
   a second rotating lever (71) pivotably supported by said fixed fulcrum (80) at an intermediate portion thereof and constructed so as to push said piston (43) of said hydraulic master cylinder at one end (71b) thereof via said knocker (62) ; and
   an equalizer lever (72) supported at the other end (71c) of said second rotating lever (71) so as to oscillate threat, while being pivotally supported at one end (72a) thereof by a floating fulcrum (82),

   wherein said traction-side link mechanism (20) and said follower-side link mechanism (21) of said interlocking brake system link mechanism are connected to said equalizer lever (72).

4. The brake device for a vehicle having a barhandle according to claim 1, **characterized in that** a stopper (51, 53) is provided for regulating the rotation of said second rotating lever (71) when said second rotating lever (71) is rotated in a direction in which said piston (43) is pushed in.

5. The brake device for a vehicle having a barhandle according to anyone of claims 1 to 4, **characterized in that** said hydraulic brake (10) is used as a front wheel brake for said first wheel, while said mechanical brake (12) is used as a rear wheel brake for said second wheel, and wherein a delay mechanism (83) is provided for activating said hydraulic brake (10) at a later timing than said mechanical brake (12) when said hydraulic brake and said mechanical brake are activated in an interlocking fashion through operation of said second brake operator (5).

6. The brake device for a vehicle having a barhandle according to anyone of claims 1 to 5; **characterized in that** each of said first and second brake operators (4, 5) is constructed as a brake lever mounted on said handlebar, and wherein said master cylinder (40) is disposed between said handlebar and said first wheel.

7. The brake device for a vehicle having a barhandle according to claim 5, **characterized in that** said delay mechanism comprises a return spring (83) for elastically pulling the other end (71c) of the second rotating lever (71) and the one end (72a) of the equalizer lever (72) that are connected to the floating fulcrum (82) in a predetermined direction.

8. A brake devic (7) for a wheeled vehicle having a steering bar handle, **characterised by**:

   a hydraulic brake (10) for braking a first wheel of said vehicle;
   a first brake operator (4) for operating said hydraulic brake (10) through a hydraulic pressure produced by a hydraulic master cylinder (40);
   an independent brake system link mechanism (17) for linking said first brake operator (4) and said hydraulic master cylinder (40), to thereby operate said hydraulic master cylinder (40);
   a mechanical brake (12) for braking a second wheel of said vehicle;
   a second brake operator (5) for operating said mechanical brake;
   an interlocking brake system link mechanism (19) for linking said second brake operator (5) and said mechanical brake (12);

   whereby:

   the hydraulic master cylinder (40) connected to said hydraulic brake (10) for producing the hydraulic pressure for said hydraulic brake, accommodates a piston (43) being movable therein;
   an application force converting mechanism (60) for converting an input load from said first brake operator (4) into said hydraulic pressure of said hydraulic master cylinder; and
   an output distributing mechanism (70) for distributing an input from said second brake operator (5) into said hydraulic pressure of said hydraulic master cylinder and an application force of said mechanical brake.

9. The brake device as claimed in claim 8, wherein said application force converting mechanism (60) comprises:

   a first rotating lever (61) connected to said first brake operator (4) via said independent brake system link mechanism (17) and rotatable around a fixed fulcrum (80) through operation of said first brake operator (4); and
   a knocker (62) rotatable around said fixed fulcrum (80) in a direction toward a cylinder hole opening of said hydraulic master cylinder (40) through a pushing movement of said first rotating lever (61) to thereby push said piston (43) of said hydraulic master cylinder (40) into said cylinder hole via a piston pushing portion.

10. The brake device as claimed in claim 8 or 9, for a vehicle in which said interlocking brake system link mechanism comprises:

   a traction-side link mechanism (20) linked to said second brake operator; and
   a follower-side link mechanism (21) linked to said mechanical brake;

   wherein:

   said output distributing mechanism (70) is capable of being interposed between said traction-side link mechanism (20) and said follower-side link mechanism (21);

   and further wherein:

   a second rotating lever (71) is pivotally supported by said fixed fulcrum (80) at an intermediate portion thereof and constructed so as to push said piston (43) of said hydraulic master cylinder at one end (71b) thereof via said knocker (62); and
   an equalizer lever (72) is supported at the other end (71c) of said second rotating lever (71) so as to oscillate threat, while being pivotably supported at one end (72a) thereof by a floating fulcrum (82),

whereby, in use of the brake device, said traction-side link mechanism (20) and said follower-side link mechanism (21) of said interlocking brake system link mechanism are connected to said equalizer lever (72).

11. The brake device as claimed in claim 10, in which a stopper (51, 53) is provided for regulating the rotation of said second rotating lever (71) when said second rotating lever (71) is rotated in a direction in which said piston (43) is pushed in.

12. The brake device as claimed in any one of claims 8 to 11 for a vehicle in which said hydraulic brake (10) is used as a front wheel brake for said first wheel, while said mechanical brake (12) is used as a rear wheel brake for said second wheel, the brake device including a delay mechanism (83) for activating said hydraulic brake (10) at a later timing than said mechanical brake (12) when said hydraulic brake and said mechanical brake are activated in an interlocking fashion through operation of said second brake operator (5).

13. The brake device as claimed in claim 12, wherein said delay mechanism comprises a return spring (83) for elastically pulling the other end (71c) of the second rotating lever (71) and the one end (72a) of the equalizer lever (72) that are connected to the floating fulcrum (82) in a predetermined direction.

**Patentansprüche**

1. Bremsvorrichtung für ein Fahrzeug mit einem Lenker, **dadurch gekennzeichnet, dass** sie aufweist:

eine hydraulische Bremse (10) zum Bremsen eines ersten Rades des Fahrzeugs;
einen hydraulischen Masterzylinder (40), der mit der hydraulischen Bremse (10) verbunden ist und einen hydraulischen Druck erzeugt, wobei der hydraulische Masterzylinder (40) einen Kolben (43) aufnimmt, der darin bewegbar ist;
einen ersten Bremsbetätiger (4) zum Betätigen der hydraulischen Bremse (10) durch den hydraulischen Druck des hydraulischen Masterzylinders (40);
einen unabhängigen Bremssystemverbindungsmechanismus (17) zum Verbinden des ersten Bremsbetätigers (4) und des hydraulischen Masterzylinders (40), um hierdurch den hydraulischen Masterzylinder (40) zu betätigen;
eine mechanische Bremse (12) zum Bremsen eines zweiten Rades des Fahrzeugs;
einen zweiten Bremsbetätiger (5) zum Betätigen der mechanischen Bremse;
einen arretierenden Bremssystem-Verbindungsmechanismus (19) zum Verbinden des zweiten Bremsbetätigers (5) und der mechanischen Bremse (12);
einen Aufbringkraftwandelmechanismus (60) zum Wandeln einer Eingabelast von dem ersten Bremsbetätiger (14) in den hydraulischen Druck des hydraulischen Masterzylinders; und
einen Ausgabeverteilungsmechanismus (70) zum Verteilen einer Eingabe von dem zweiten Bremsbetätiger (5) in den hydraulischen Druck des hydraulischen Masterzylinders und eine Aufbringkraft der mechanischen Bremse.

2. Bremsvorrichtung für ein Fahrzeug mit einem Lenker nach Anspruch 1, **dadurch gekennzeichnet, dass** der Aufbringkraft-Wandelmechanismus (60) aufweist:

einen ersten Drehhebel (61), der mit dem ersten Bremsbetätiger (4) über den unabhängigen Bremssystem-Verbindungsmechanismus (17) verbunden ist um ein festes Drehgelenk (80) durch Betätigung des ersten Bremsbetätigers (4) drehbar ist, und
einen Klopfer (62), der um das feste Drehgelenk (80) in eine Richtung zu einer Zylinderlochöffnung des hydraulischen Masterzylinders (40) durch eine Schubbewegung des ersten Drehhebels (61) drehbar ist, um hierdurch den Kolben (43) des hydraulischen Masterzylinders (40) in das Zylinderloch über einen Kolbenschubabschnitt zu schieben.

3. Bremsvorrichtung für ein Fahrzeug mit einem Lenker nach Anspruch 1, **dadurch gekennzeichnet, dass** der arretierende Bremssystem-Verbindungsmechanismus aufweist:

einen traktionsseitigen Verbindungsmechanismus (20), der mit dem zweiten Bremsbetätiger verbunden ist;

einen nachlaufseitigen Verbindungsmechanismus (21), der mit der mechanischen Bremse verbunden ist, wobei der Ausgabe-Verteilungsmechanismus (70) zwischen dem traktionsseitigen Verbindungsmechanismus (20) und dem nachlaufseitigen Verbindungsmechanismus (21) eingelegt ist;

einen zweiten Drehhebel (71), der schwenkbar durch das feste Drehgelenk (80) an einer mittleren Position hiervon gelagert ist und derart aufgebaut ist, um den Kolben (43) des hydraulischen Masterzylinders an einem Ende (71b) hiervon unter den Klopfer (62) zu schieben; und

einen Ausgleichshebel (72), der an dem anderen Ende (71c) des zweiten Drehhebels (71) derart gelagert ist, um dort zu oszillieren, während er an einem Ende (72a) davon durch ein schwimmendes Drehgelenk (82) schwenkbar gelagert ist;

wobei der traktionsseitige Verbindungsmechanismus (20) und der nachlaufseitige Verbindungsmechanismus (21) des arretierenden Bremssystem-Verbindungsmechanismus mit dem Ausgleichshebel (72) verbunden sind.

4. Bremsvorrichtung für ein Fahrzeug mit einem Lenker nach Anspruch 1, **dadurch gekennzeichnet, dass** ein Anschlag (51, 53) zum Regulieren der Rotation des zweiten Drehhebels (71) vorgesehen ist, wenn der zweite Drehhebel (71) in einer Richtung rotiert wird, in welcher der Kolben (43) eingeschoben wird.

5. Bremsvorrichtung für ein Fahrzeug mit einem Lenker nach einem der Ansprüche 1 bis 4, **dadurch gekennzeichnet, dass** die hydraulische Bremse (10) als Vorderradbremse für das erste Rad verwendet wird, während die mechanische Bremse (12) als Hinterradbremse für das zweite Rad verwendet wird, und wobei ein Verzögerungsmechanismus (83) zum Aktivieren der hydraulischen Bremse (10) zu einem späteren Zeitpunkt als die mechanische Bremse (12) vorgesehen ist, wenn die hydraulische Bremse und die mechanische Bremse in arretierender Weise durch eine Betätigung des zweiten Bremsbetätigers (5) aktiviert werden.

6. Bremsvorrichtung für ein Fahrzeug mit einem Lenker nach einem der Ansprüche 1 bis 5, **dadurch gekennzeichnet, dass** jeder des ersten und des zweiten Bremsbetätigers (4, 5) als Bremshebel, der an dem Lenker montiert ist, aufgebaut ist, und wobei der Masterzylinder (40) zwischen dem Lenker und dem ersten Rad vorgesehen ist.

7. Bremsvorrichtung für ein Fahrzeug mit einem Lenker nach Anspruch 5, **dadurch gekennzeichnet, dass** der Verzögerungsmechanismus eine Rückstellfeder (83) zum elastischen Ziehen des anderen Endes (71c) des zweiten Drehhebels (71) und des einen Endes (72a) des Ausgleichshebels (72), die mit dem schwimmenden Drehgelenk (82) verbunden sind, in einer vorbestimmten Richtung aufweist.

8. Bremsvorrichtung (7) für ein Radfahrzeug mit einem Lenker, **gekennzeichnet durch**:

eine hydraulische Bremse (10) zum Bremsen eines ersten Rades des Fahrzeugs;

einen ersten Bremsbetätiger (4) zum Betätigen der hydraulischen Bremse (10) **durch** einen hydraulischen Druck, der **durch** einen hydraulischen Masterzylinder (40), erzeugt ist;

einen unabhängigen Bremssystemverbindungsmechanismus (17) zum Verbinden des ersten Bremsbetätigers (4) und des hydraulischen Masterzylinders (40), um hierdurch den hydraulischen Masterzylinder (40) zu betätigen;

eine mechanische Bremse (12) zum Bremsen eines zweiten Rades des Fahrzeugs;

einen zweiten Bremsbetätiger (5) zum Betätigen der mechanischen Bremse;

einen arretierenden Bremssystem-Verbindungsmechanismus (19) zum Verbinden des zweiten Bremsbetätigers (5) und der mechanischen Bremse (12); wobei:

der hydraulische Masterzylinder (40), der mit der hydraulischen Bremse (10) zum Erzeugen des hydraulischen Drucks für die hydraulische Bremse verbunden ist, einen Kolben (43) aufnimmt, der darin bewegbar ist;

einen Aufbringkraftwandelmechanismus (60) zum Wandeln einer Eingabelast von dem ersten Bremsbetätiger (4) in den hydraulischen Druck des hydraulischen Masterzylinders; und

einen Ausgabeverteilungsmechanismus (70) zum Verteilen einer Eingabe von dem zweiten Bremsbetätiger (5) in den hydraulischen Druck des hydraulischen Masterzylinders und eine Aufbringkraft der mechanischen Bremse.

9. Bremsvorrichtung nach Anspruch 8, bei welcher der Aufbringkraft-Wandelmechanismus (60) aufweist:

einen ersten Drehhebel (61), der mit dem ersten Bremsbetätiger (4) über den unabhängigen Bremssystem-Ver-

14

bindungsmechanismus (17) verbunden ist um ein festes Drehgelenk (80) durch eine Betätigung des ersten Bremsbetätigers (4) drehbar ist, und

einen Klopfer (62), der um das feste Drehgelenk (80) in einer Richtung zu einer Zylinderlochöffnung des hydraulischen Masterzylinders (40) durch eine Schubbewegung des ersten Drehhebels (61) rotierbar ist, um hierdurch den Kolben (43) des hydraulischen Masterzylinders (40) in das Zylinderloch über einen Kolbenschubabschnitt zu schieben.

**10.** Bremsvorrichtung nach Anspruch 8 oder 9, für ein Fahrzeug, in welchem der arretierende Bremssystem-Verbindungsmechanismus aufweist:

einen traktionsseitigen Verbindungsmechanismus (20), der mit dem zweiten Bremsbetätiger verbunden ist; und einen nachlaufseitigen Verbindungsmechanismus (21), der mit der mechanischen Bremse verbunden ist;

wobei:

der Ausgabe-Verteilungsmechanismus (70) in der Lage ist zwischen dem traktionsseitigen Verbindungsmechanismus (20) und dem nachlaufseitigen Verbindungsmechanismus (21) eingelegt zu werden; und wobei ferner:

einen zweiter Drehhebel (71) schwenkbar durch das feste Drehgelenk (80) an einem mittleren Abschnitt hiervon gelagert ist und derart aufgebaut ist, um den Kolben (43) des hydraulischen Masterzylinders an einem Ende (71b) hiervon über den Klopfer (62) zu schieben; und

ein Ausgleichshebel (72) ist an dem anderen Ende (71c) des zweiten Drehhebels (71) derart gelagert ist, um dort zu oszillieren, während er schwenkbar an dem anderen Ende (72a) hiervon durch ein schwimmendes Drehgelenk (82) gelagert ist;

wobei im Gebrauch der Bremsvorrichtung der traktionsseitige Verbindungsmechanismus (20) und der nachlaufseitige Verbindungsmechanismus (21) des arretierenden Bremssystem-Verbindungsmechanismus mit dem Ausgleichshebel (72) verbunden sind.

**11.** Bremsvorrichtung nach Anspruch 10, bei welcher ein Anschlag (51, 53) zum Regeln der Rotation des zweiten Drehhebels (71) vorgesehen ist, wenn der zweite Drehhebel (71) in einer Richtung rotiert wird, in welcher der Kolben (43) eingeschoben wird.

**12.** Bremsvorrichtung nach einem der Ansprüche 8 bis 11,für ein Fahrzeug, bei welchem die hydraulische Bremse (10) als Vorderradbremse für das erste Rad verwendet wird, während die mechanische Bremse (12) als Hinterradbremse für das zweite Rad verwendet wird, wobei die Bremsvorrichtung einen Verzögerungsmechanismus (83) zum Aktivieren der hydraulischen Bremse (10) zu einem späteren Zeitpunkt als die mechanische Bremse (12) vorgesehen ist, wenn die hydraulische Bremse (12) aufweist, wenn die hydraulische Bremse und die mechanische Bremse in arretierender Weise durch eine Betätigung des zweiten Bremsbetätigers (5) aktiviert sind.

**13.** Bremsvorrichtung nach Anspruch 12, bei welcher der Verzögerungsmechanismus eine Rückstellfeder (83) zum elastischen Ziehen des anderen Endes (71c) des zweiten Drehhebels (71) und des einen Endes (72a) des Ausgleichshebels (72), die mit dem schwimmenden Drehgelenk (82) verbunden sind, in einer vorbestimmten Richtung aufweist.

## Revendications

**1.** Dispositif de frein pour un véhicule ayant un guidon, **caractérisé en ce qu'**il comprend :

un frein hydraulique (10) pour freiner une première roue dudit véhicule ;
un maître cylindre hydraulique (40) connecté audit frein hydraulique (10) et produisant une pression hydraulique, ledit maître cylindre hydraulique (40) logeant un piston (43) mobile à l'intérieur de celui-ci ;
un premier actionneur de frein (4) pour actionner ledit frein hydraulique (10) par l'intermédiaire de ladite pression hydraulique dudit maître cylindre hydraulique (40) ;
un mécanisme de liaison de système de frein indépendant (17) pour lier ledit premier actionneur de frein (4) et ledit maître cylindre hydraulique (40) de façon à actionner ainsi ledit maître cylindrique hydraulique (40) ;

un frein mécanique (12) pour freiner une deuxième roue dudit véhicule ;
un deuxième actionneur de frein (5) pour actionner ledit frein mécanique ;
un système de liaison de système de frein combiné (19) pour lier ledit deuxième actionneur de frein (5) et ledit frein mécanique (12) ;
un mécanisme de conversion de force d'application (60) pour convertir une charge d'admission provenant dudit premier actionneur de frein (4) en ladite pression hydraulique dudit maître cylindre hydraulique ; et
un mécanisme de distribution de sortie (70) pour distribuer une admission provenant dudit deuxième actionneur de frein (5) en ladite pression hydraulique dudit maître cylindre hydraulique et une force d'application dudit frein mécanique.

2. Dispositif de frein pour un véhicule ayant un guidon selon la revendication 1, **caractérisé en ce que** ledit mécanisme de conversion de force d'application (60) comprend :

un premier levier rotatif (61) connecté audit premier actionneur de frein (4) via ledit mécanisme de liaison de système de frein indépendant (17) et pouvant tourner autour d'un pivot fixe (80) par l'actionnement dudit premier actionneur de frein (4) ; et
un heurtoir (62) pouvant tourner autour dudit pivot fixe (80) dans une direction vers une ouverture de trou de cylindre dudit maître cylindre hydraulique (40) par l'intermédiaire d'un mouvement de poussée dudit premier levier rotatif (61) de façon à pousser ainsi ledit piston (43) dudit maître cylindre hydraulique (40) dans ledit trou de cylindre via une partie de poussée de piston.

3. Dispositif de frein pour un véhicule ayant un guidon selon la revendication 1, **caractérisé en ce que** ledit mécanisme de liaison de système de frein combiné comprend :

un mécanisme de liaison du côté traction (20) lié audit deuxième actionneur de frein ;
un mécanisme de liaison du côté entraîné (21) lié audit frein mécanique, ledit mécanisme de distribution de sortie (70) étant interposé entre ledit mécanisme de liaison du côté traction (20) et ledit mécanisme de liaison du côté entraîné (21) ;
un deuxième levier rotatif (71) supporté de manière à pouvoir pivoter par ledit pivot fixe (80) au niveau d'une partie intermédiaire de celui-ci et construit de façon à pousser ledit piston (43) dudit maître cylindre hydraulique à une extrémité (71b) de celui-ci via ledit heurtoir (62) ; et
un levier égaliseur (72) supporté à l'autre extrémité (71c) dudit deuxième levier rotatif (71) de façon à osciller à ce niveau, tout en étant supporté de manière à pouvoir pivoter à l'autre extrémité (72a) de celui-ci par un pivot flottant (82),

dans lequel ledit mécanisme de liaison du côté traction (20) et ledit mécanisme de liaison du côté entraîné (21) dudit mécanisme de liaison de système de frein combiné sont connectés audit levier égaliseur (72).

4. Dispositif de frein pour un véhicule ayant un guidon selon la revendication 1, **caractérisé en ce qu'**un butoir (51, 53) est disposé pour réguler la rotation dudit deuxième levier rotatif (71) quand ledit deuxième levier rotatif (71) tourne dans une direction dans laquelle ledit piston (43) est poussé.

5. Dispositif de frein pour un véhicule ayant un guidon selon l'une quelconque des revendications 1 à 4, **caractérisé en ce que** ledit frein hydraulique (10) est utilisé en tant que frein de roue avant pour ladite première roue, tandis que ledit frein mécanique (12) est utilisé en tant que frein de roue arrière pour ladite deuxième roue, et dans lequel un mécanisme de retard (83) est disposé pour activer ledit frein hydraulique (10) plus tard que ledit frein mécanique (12) quand ledit frein hydraulique et ledit frein mécanique sont activés de manière combinée par l'actionnement dudit deuxième actionneur de frein (5).

6. Dispositif de frein pour un véhicule ayant un guidon selon l'une quelconque des revendications 1 à 5, **caractérisé en ce que** chacun desdits premier et deuxième actionneurs de frein (4, 5) est construit sous la forme d'une manette de frein montée sur ledit guidon, et dans lequel ledit maître cylindre (40) est disposé entre ledit guidon et ladite première roue.

7. Dispositif de frein pour un véhicule ayant un guidon selon la revendication 5, **caractérisé en ce que** ledit mécanisme de retard comprend un ressort de rappel (83) pour tirer élastiquement l'autre extrémité (71c) du deuxième levier rotatif (71) et une extrémité (72a) du levier égaliseur (72) qui sont connectées au pivot flottant (82) dans une direction prédéterminée.

8. Dispositif de frein (7) pour un véhicule à roues ayant un guidon de direction, **caractérisé par** :

   un frein hydraulique (10) pour freiner une première roue dudit véhicule ;
   un premier actionneur de frein (4) pour actionner ledit frein hydraulique (10) par l'intermédiaire d'une pression hydraulique produite par un maître cylindre hydraulique (40) ;
   un mécanisme de liaison de système de frein indépendant (17) pour lier ledit premier actionneur de frein (4) et ledit maître cylindre hydraulique (40) de façon à actionner ainsi ledit maître cylindrique hydraulique (40) ;
   un frein mécanique (12) pour freiner une deuxième roue dudit véhicule ;
   un deuxième actionneur de frein (5) pour actionner ledit frein mécanique ;
   un système de liaison de système de frein combiné (19) pour lier ledit deuxième actionneur de frein (5) et ledit frein mécanique (12) ;
   grâce à quoi :

   le maître cylindrique hydraulique (40) connecté audit frein hydraulique (10) pour produire la pression hydraulique pour ledit frein hydraulique loge un piston (43) mobile à l'intérieur de celui-ci ;
   un mécanisme de conversion de force d'application (60) pour convertir une charge d'admission provenant dudit premier actionneur de frein (4) en ladite pression hydraulique dudit maître cylindre hydraulique ; et
   un mécanisme de distribution de sortie (70) pour distribuer une admission provenant dudit deuxième actionneur de frein (5) en ladite pression hydraulique dudit maître cylindre hydraulique et une force d'application dudit frein mécanique.

9. Dispositif de frein selon la revendication 8, dans lequel ledit mécanisme de conversion de force d'application (60) comprend :

   un premier levier rotatif (61) connecté audit premier actionneur de frein (4) via ledit mécanisme de liaison de système de frein indépendant (17) et pouvant tourner autour d'un pivot fixe (80) par l'actionnement dudit premier actionneur de frein (4) ; et
   un heurtoir (62) pouvant tourner autour dudit pivot fixe (80) dans une direction vers une ouverture de trou de cylindre dudit maître cylindre hydraulique (40) par l'intermédiaire d'un mouvement de poussée dudit premier levier rotatif (61) de façon à pousser ainsi ledit piston (43) dudit maître cylindre hydraulique (40) dans ledit trou de cylindre via une partie de poussée de piston.

10. Dispositif de frein selon la revendication 8 ou 9 pour un véhicule dans lequel ledit mécanisme de liaison de système de frein combiné comprend :

    un mécanisme de liaison du côté traction (20) lié audit deuxième actionneur de frein ;
    un mécanisme de liaison du côté entraîné (21) lié audit frein mécanique,

    dans lequel :

    ledit mécanisme de distribution de sortie (70) peut être interposé entre ledit mécanisme de liaison du côté traction (20) et ledit mécanisme de liaison du côté entraîné (21) ;

    et dans lequel en outre :

    un deuxième levier rotatif (71) est supporté de manière à pouvoir pivoter par ledit pivot fixe (80) au niveau d'une partie intermédiaire de celui-ci et est construit de façon à pousser ledit piston (43) dudit maître cylindre hydraulique à une extrémité (71b) de celui-ci via ledit heurtoir (62) ; et
    un levier égaliseur (72) est supporté à l'autre extrémité (71c) dudit deuxième levier rotatif (71) de façon à osciller à ce niveau, tout en étant supporté de manière à pouvoir pivoter à l'autre extrémité (72a) de celui-ci par un pivot flottant (82),

    grâce à quoi, lors de l'utilisation du dispositif de frein, ledit mécanisme de liaison du côté traction (20) et ledit mécanisme de liaison du côté entraîné (21) dudit mécanisme de liaison de système de frein combiné sont connectés audit levier égaliseur (72).

11. Dispositif de frein selon la revendication 10, dans lequel un butoir (51, 53) est disposé pour réguler la rotation dudit deuxième levier rotatif (71) quand ledit deuxième levier rotatif (71) tourne dans une direction dans laquelle ledit piston (43) est poussé.

12. Dispositif de frein selon l'une quelconque des revendications 8 à 11 pour un véhicule dans lequel ledit frein hydraulique (10) est utilisé en tant que frein de roue avant pour ladite première roue, tandis que ledit frein mécanique (12) est utilisé en tant que frein de roue arrière pour ladite deuxième roue, le dispositif de frein comprenant un mécanisme de retard (83) pour activer ledit frein hydraulique (10) plus tard que ledit frein mécanique (12) quand ledit frein hydraulique et ledit frein mécanique sont activés de manière combinée par l'actionnement dudit deuxième actionneur de frein (5).

13. Dispositif de frein selon la revendication 12, dans lequel ledit mécanisme de retard comprend un ressort de rappel (83) pour tirer élastiquement l'autre extrémité (71c) du deuxième levier rotatif (71) et une extrémité (72a) du levier égaliseur (72) qui sont connectées au pivot flottant (82) dans une direction prédéterminée.

# FIG. 1

## FIG. 2

EP 0 995 653 B1

# FIG. 3

INOPERATIVE

21

# FIG. 4

# FIG. 5

# FIG. 6

RIGHT ( INDEPENDENT )

EP 0 995 653 B1

# FIG. 7

LEFT ( INTERLOCKING )

25

# FIG. 8

LEFT AND RIGHT OPERATION

# FIG. 9